(19) Europäisches Patentamt
European Patent Office
Office européen des brevets

(11) **EP 4 737 523 A1**

(12) **EUROPÄISCHE PATENTANMELDUNG**

(43) Veröffentlichungstag:
06.05.2026 Patentblatt 2026/19

(21) Anmeldenummer: 24210573.2

(22) Anmeldetag: 04.11.2024

(51) Internationale Patentklassifikation (IPC):
*C09D 5/00* *(2006.01)*

(52) Gemeinsame Patentklassifikation (CPC):
**C09D 5/00**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: STO SE & Co. KGaA
79780 Stühlingen (DE)

(72) Erfinder:
• **Nägele, Alexander**
  **79848 Bonndorf (DE)**
• **Würstl, Joachim**
  **78052 Vilingen-Schwenningen (DE)**
• **Troll, Michael**
  **79848 Bonndorf-Dillendorf (DE)**
• **Burgeth, Gerald**
  **79805 Eggingen (DE)**

(74) Vertreter: **Gottschalk, Matthias**
**Gottschalk Maiwald**
**Patentanwalts- und Rechtsanwalts- (Schweiz)**
**GmbH**
**Florastrasse 14**
**8008 Zürich (CH)**

(54) **BESCHICHTUNGSZUSAMMENSETZUNG ALS SPERRGRUND, VERWENDUNG UND OBERFLÄCHE AUFWEISEND BESCHICHTUNGSZUSAMMENSETZUNG**

(57)     Die vorliegende Erfindung betrifft bindemittelarme Beschichtungszusammensetzungen zur Verwendung als Sperrgrund. Weiterhin betrifft die Erfindung die Verwendung der erfindungsgemäßen Beschichtungszusammensetzung als Sperrgrund auf Lignin-haltigen Oberflächen sowie eine mit der erfindungsgemäßen Beschichtungszusammensetzung beschichtete Lignin-haltige Oberfläche.

**EP 4 737 523 A1**

**Beschreibung**

Die vorliegende Erfindung betrifft bindemittelarme Beschichtungszusammensetzungen zur Verwendung als Sperrgrund. Weiterhin betrifft die Erfindung die Verwendung der erfindungsgemäßen Beschichtungszusammensetzung als Sperrgrund auf Lignin-haltigen Oberflächen sowie eine mit der erfindungsgemäßen Beschichtungszusammensetzung beschichtete Lignin-haltige Oberfläche.

Stand der Technik

Sperrgrunde (auch als Absperrmittel, Isoliergrunde, oder Isolierfarben bezeichnet) sind aus dem Stand der Technik hinlänglich bekannt. Diese werden auf Oberflächen aufgetragen und sollen das Ausbluten oder das Durchschlagen von löslichen Bestandteilen aus dem Untergrund bzw. von Bestandteilen aus der Oberfläche verhindern. Ausbluten bzw. Durchschlagen im Allgemeinen meint das Sichtbarwerden von zumeist löslichen Bestandteilen aus der Oberfläche, die in die nachfolgende Beschichtung migrieren. Beispiele hierfür sind unter anderem Rostdurchschläge bei einer Dispersionsfarbe, Ausblutungen löslicher Bestandteile Hölzer, von Ästen und Rindenanteilen bei Holzspanplatten, Teer, Bitumen, Öl und Nikotin. Die Diffusion eines Farbmittels bzw. das Migrieren von der Oberfläche durch eine Beschichtung ist jedoch unerwünscht, da dies zumeist zu einer Fleckenbildung oder einer Farbveränderung führt. Verhindert werden kann das sogenannte Durchschlagen bzw. das Ausbluten durch das Aufbringen eines Sperrgrundes, wobei idealerweise ein porenfreier Film auf der Oberfläche ausgebildet wird.

Es ist bekannt, dass Gipskartonplatten (GKP) oder Gipsfaserplatten (GFP) üblicherweise zu größeren Ausblutungen neigen, wenn diese mit Sonnenlicht bestrahlt werden. Es wird vermutet, dass die im Karton der GKP bzw. GFP enthaltenen Lignin-Makromoleküle durch den Lichteinfluss gespalten bzw. teilweise abgebaut werden. Die dabei erhaltenen Bruchstücke des Lignins migrieren umso leichter an die Oberfläche. Es wird ebenfalls angenommen, dass die Bruchstücke leicht photooxidiert werden und sich organische Säuren (Carbonsäuren) bilden.

Üblicherweise vergehen nach dem Einbau von GKP bzw. GFP bis zur vollständigen Beschichtung bei einem Baugeschehen oftmals mehrere Tage, Wochen oder gar Monate. Dies bedeutet, dass die Platten oftmals über einen langen Zeitraum der Lichteinwirkung ausgesetzt sein können. Dies insbesondere vor dem Hintergrund, dass die abschließende Bearbeitung der Platten beim Innenausbau regelmäßig erst zum Schluss des Bauvorhabens erfolgt, also im letzten Schritt. Dadurch, dass die GKP bzw. GFP teilweise über einen langen Zeitraum dem Sonnenlicht ausgesetzt sein können, treten regelmäßig Lignin-Ausblutungen auf den Oberflächen der GKP oder GFP auf. Dies geschieht teilweise schon erfahrungsgemäß nach wenigen Stunden durch Lichteinfluss, der vermutlich vom photooxidativen Abbau des Lignins rührt.

Um dieses bekannte Problem zu umgehen, werden bisher Sperrgrunde eingesetzt. Bei diesen handelt es sich üblicherweise um wässrige oder lösungsmittelhaltige Beschichtungszusammensetzungen. Den aus dem Stand der Technik bekannten Sperrgrunden ist gemeinsam, dass diese einen hohen Anteil eines Bindemittels aufweisen. Die Sperrgrunde werden dazu eingesetzt, das Durchschlagen von beispielsweise Nikotin- oder Wasserflecken, Rußverschmutzungen, Teerflecken, färbenden Bestandteilen aus der Deckschicht von Gipskartonplatten, Wandschmierereien, z.B. mit Kugelschreibern, Filzstiften oder anderen Materialien ("Graffiti") oder Holzinhaltsstoffen aus Hartfaser- und Pressspanplatten, astreichen und tropischen Hölzern zu verhindern.

Die herkömmlichen aus dem Stand der Technik bekannten Sperrgrunde sind zumeist weiß und werden mit speziellen Bindemitteln sowie, bei lösungsmittelhaltigen Sperrgrunden, mit zumeist mildriechenden Lösungsmitteln formuliert. Derartige Sperrgrunde trocknen regelmäßig matt und spannungsarm auf der Oberfläche und ergeben einen porendichten Film. Bei starken Verunreinigungen auf der Oberfläche muss regelmäßig zunächst versucht werden, diese Verunreinigungen durch entsprechende Vorarbeiten wenigstens teilweise zu entfernen. Andernfalls kann es ebenfalls nötig sein, dass mehrere Anstriche mit dem Sperrgrund aufgetragen werden müssen. Dabei muss beim Auftragen von mehreren Schichten des Sperrgrundes zwingend auf die angegebenen Trocknungszeiten geachtet werden.

Die bisher aus dem Stand der Technik bekannten Sperrgrunde haben den Nachteil, dass große Mengen an Bindemitteln benötigt werden, um einen porendichten Film auf der zu behandelnden Oberfläche zu erzielen, um diese weitestgehend zu versiegeln. Dies ist jedoch deshalb besonders nachteilig, da die Bindemittel wiederum mit hohen Kosten verbunden sind. Weiterhin sind viele aus dem Stand der Technik bekannte Sperrgrunde auf Wasserbasis, was die Lagerstabilität negativ beeinträchtigen kann und oftmals die Verwendung von zusätzlichen Konservierungsmitteln notwendig macht. Dies führt wiederum zu höheren Kosten und ist somit ebenfalls nachteilig.

Es war daher eine Aufgabe der vorliegenden Erfindung, eine Beschichtungszusammensetzung bereitzustellen, die als Sperrgrund eingesetzt werden kann, und die ohne die bisher erforderlichen großen Mengen an Bindemitteln wirksam gegen Lignin-Ausblutungen und das Durchschlagen löslicher Bestandteile ist.

Diese und weitere Probleme werden mittels der Gegenstände der unabhängigen Patentansprüche gelöst. Vorteilhafte Ausgestaltungen sind Gegenstand der abhängigen Patentansprüche oder werden nachgehend genauer beschrieben.

Beschreibung der Erfindung

Überraschenderweise wurde gefunden, dass sich das Durchschlagen bzw. Ausbluten von löslichen Bestandteilen verhindern lässt, wenn die zu behandelnden Oberflächen, insbesondere Lignin-haltige Oberflächen, mit einer Beschichtungszusammensetzung behandelt werden, die wenigstens

- 1-12 Gew.% organische Polymerbindemittel,
- 10-50 Gew.% Calcium-Ionenquellen,
- 20-50 Gew.% Füllstoffe und
- 30-85 Gew.% Wasser

umfasst, wobei sich die Gew.% auf die Gesamtmasse der Beschichtungszusammensetzung, inklusive etwaiger zusätzlicher Bestandteile beziehen und insgesamt 100 Gew.% ergeben.

Die Calcium-Ionenquellen weisen ein Löslichkeitsprodukt, berechnet als negativer dekadischer Logarithmus ($pK_L$) bei 25 °C von 4,0 bis 7,0 auf. Bevorzugt handelt es sich bei den Calcium-Ionenquellen um Calciumhydroxid ($Ca(OH)_2$) und/oder Calciumsulfat ($CaSO_4$), besonders bevorzugt um Calciumhydroxid. Die Löslichkeitsprodukte können einerseits mittels des einschlägigen Fachmanns bekannter Methoden gemessen bzw. bestimmt werden. Andererseits sind diese den entsprechenden, dem Fachmann bekannten Nachschlagewerken zu entnehmen.

Im Sinne der vorliegenden Erfindung umfasst der Begriff Calcium-Ionenquelle auch Modifikationen, wie zum Beispiel Anhydrate oder Hydrate. Insbesondere umfassen die Begriffe Calciumhydroxid und Calciumsulfat auch deren üblichen und bekannten Modifikationen. So sind ausdrücklich sowohl wasserfreies Calciumsulfat (Anhydrit), sämtliche Hemihydrate ($CaSO_4 \cdot \frac{1}{2} H_2O$) und Dihydrate ($CaSO_4 \cdot 2 H_2O$) als mögliche Calcium-Ionenquelle umfasst.

Weiterhin soll im Sinne der vorliegenden Erfindung der Begriff "Lignin-haltig" sämtliche, insbesondere lösliche Holzinhaltsstoffe umfassen, welche migrieren können und potentiell als Ausblutungen bzw. als Durchschlag auf der Oberfläche wahrnehmbar sind. Hierzu zählen insbesondere Lignin selbst, bzw. Bestandteile des Lignins, welche zum Beispiel durch Licht- oder Sonneneinstrahlung oder andere physikalischen oder chemischen Einflüsse, beispielsweise Photooxidation, entstehen können.

Die Erfinder haben überraschenderweise gefunden, dass bei einem Anteil von mindestens 10 Gew.% an einer oder mehrerer Calcium-Ionenquellen, vorzugsweise an Calciumhydroxid und/oder Calciumsulfat, das Durchschlagen bzw. das Ausbluten auf Lignin-haltigen Oberflächen verhindert werden kann, ohne das hierfür ein großer Anteil eines Bindemittels notwendig ist. Es wird vermutet, dass die Calcium-Ionenquellen der erfindungsgemäßen Beschichtungszusammensetzung, insbesondere $Ca(OH)_2$ und $CaSO_4$, selbst eine wirksame Barriere gegen Lignin-Ausblühungen bilden, wobei diese Absperrwirkung jedoch erst bei einem Anteil von ca. 10 Gew.% der Calcium-Ionenquelle in der Beschichtungszusammensetzung einsetzt. Eine Beschichtungszusammensetzung mit weniger als 10 Gew.% einer oder mehrerer Calcium-Ionenquellen, insbesondere Calciumhydroxid und/oder Calciumsulfat, zeigt nur eine unzureichende Absperrwirkung.

Ohne an die Theorie gebunden zu sein, vermuten die Erfinder, dass die Absperrwirkung der erfindungsgemäßen Beschichtungszusammensetzung ebenfalls darauf beruht, dass die in der erfindungsgemäßen Beschichtungszusammensetzung enthaltenen $Ca^{2+}$-Ionen mit Abbauprodukten des Lignins bzw. mit Abbauprodukten der Holzinhaltsstoffe reagieren. Bei den Abbauprodukten kann es sich unter anderem um Carbonsäuren handeln, welche sich durch Photooxidation von Lignin-Makromolekülen auf den zu behandelnden Flächen bilden. Die $Ca^{2+}$-Ionen bilden mit den Abbauprodukten schwer- bzw. unlösliche Verbindungen, welche nicht mehr weiter migrieren können und es folglich zu keiner Fleckenbildung kommt.

Ebenfalls wird vermutet, dass sich eine Calciumcarbonatschicht aus den $Ca^{2+}$-Ionen mit dem Kohlendioxid der Umgebungsluft auf der Oberfläche bilden kann. Aufgrund der Unlöslichkeit des Calciumcarbonats hat solch eine Carbonatschicht eine zusätzliche absperrende Wirkung. Es ist bekannt, dass diese Reaktion bei höheren pH-Werten schneller abläuft. Da der pH-Wert von Calciumhydroxid über dem pH-Wert von Calciumsulfat liegt, läuft die Carbonatisierung schneller ab, weshalb $Ca(OH)_2$ bevorzugt als Calcium-Ionenquelle eingesetzt wird.

Ein weiterer Grund für die Bevorzugung von Calciumhydroxid als Calcium-Ionenquelle gegenüber $CaSO_4$ ist, dass aufgrund des relativ hohen pH-Werts von ca. 12 auf herkömmliche Konservierungsmittel wie Topfkonservierungsmittel verzichtet werden kann. Daher ist eine konservierungsmittelfreie Beschichtungszusammensetzung mit $Ca(OH)_2$ als Calcium-Ionenquelle besonders bevorzugt.

In einer bevorzugten Ausgestaltung umfasst die Beschichtungszusammensetzung 2-10 Gew.%, mehr bevorzugt 3-8 Gew.% organisches Polymerbindemittel. Vorzugsweise ist das organische Polymerbindemittel ausgesucht aus einem oder mehreren Mitgliedern der Gruppe bestehend aus: Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein. Bevorzugt ist oder umfasst die erfindungsgemäße Beschichtungszusammensetzung ein organisches Polymerbindemittel auf Basis von Reinacrylaten.

Das organische Polymerbindemittel liegt zweckmäßigerweise in Form einer wässrigen Bindemittedispersion vor. Der Feststoffgehalt der wässrigen Bindemitteldispersion beträgt vorzugsweise 40 - 62 Gew.-%, besonders bevorzugt 45 - 62 Gew.-%, bezogen auf das Gesamtgewicht der Dispersion.

In einer weiteren bevorzugten Ausgestaltung umfasst die Beschichtungszusammensetzung 10-45 Gew.%, mehr bevorzugt 15-40 Gew.% Calcium-Ionenquellen. Die Erfinder haben gefunden, dass die gewünschte Absperrwirkung zum Verhindern von Ausblutungen, insbesondere auf Lignin-haltigen Oberflächen, ab ca. 10 Gew.% Calcium-Ionenquellen, vorzugsweise Calciumhydroxid oder Calciumsulfat, in der erfindungsgemäßen Beschichtungszusammensetzung einsetzt. Dabei wurde weiterhin gefunden, dass höhere Anteile an Calcium-Ionenquellen die Absperrwirkung verstärken. Eine zufriedenstellende Absperrwirkung wird jedoch erfindungsgemäß ab einem Anteil von 10 Gew.% an Calcium-Ionenquellen erzielt.

In noch einer weiteren bevorzugten Ausgestaltung umfasst die Beschichtungszusammensetzung 5-40 Gew.%, weiter bevorzugt 8-35 Gew.% einen oder mehrere Füllstoffe. Bei dem Füllstoff handelt es sich um einen karbonatischen und/oder silikatischen Füllstoff, wobei vorzugsweise der Füllstoff ausgewählt ist aus einem oder mehreren Mitgliedern der Gruppe bestehend aus: Quarz, Cristobalit, Schichtsilikate, Talkum, Kaolin, Glimmer, Calcit, Marmor, Dolomit, Calcium-carbonat ($CaCO_3$), wobei besonders bevorzugt der Füllstoff Calciumcarbonat ($CaCO_3$) ist oder umfasst. Der bevorzugte Füllstoff Calciumcarbonat zählt im Sinne der vorliegenden Erfindung aufgrund seiner Unlöslichkeit ausdrücklich nicht zu den Calcium-Ionenquellen der erfindungsgemäßen Beschichtungszusammensetzung.

Bevorzugt umfasst die erfindungsgemäße Beschichtungszusammensetzung bis zu 10 Gew.%, vorzugsweise 0,1-6 Gew.%, stärker bevorzugt 1-4 Gew.% ein oder mehrere Pigmente, insbesondere Weißpigmente und/oder Farbpigmente.

In noch einer weiteren bevorzugten Ausgestaltung umfasst die erfindungsgemäße Beschichtungszusammensetzung 0,1-5 Gew.%, vorzugsweise 0,2-3 Gew.%, stärker bevorzugt 0,3-2 Gew.% ein oder mehrere Additive. Die Additive sind insbesondere ausgewählt aus einem oder mehreren Mitgliedern der Gruppe bestehend aus: rheologische Additive, Verdicker, Netzmittel, Dispergiermittel, Topfkonservierungsmittel, Filmkonservierungsmittel, Filmbindehilfsmittel, Entschäumer, pH-Einsteller, Wasserrückhaltemittel, Fasern, Biozide.

In einer weiteren bevorzugten Ausgestaltung hat die erfindungsgemäße Beschichtungszusammensetzung einen pH-Wert von > 10, mehr bevorzugt > 11, und noch mehr bevorzugt $\geq$ 12. Der pH-Wert kann in einer weiteren bevorzugten Ausgestaltung mittels eines pH-Einstellers auf einen gewünschten pH-Wert gebracht werden. Als pH-Einsteller werden insbesondere wässrige Alkalilaugen eingesetzt. Dabei kann es vor allem bei der Verwendung von Calciumsulfat als Calcium-Ionenquelle in der erfindungsgemäßen Beschichtungszusammensetzung vorteilhaft sein, dass ein pH-Einsteller zum Erreichen des gewünschten pH-Wertes eingesetzt wird. Die erfindungsgemäßen Beschichtungszusammensetzungen sind im Wesentlichen frei von Alkalisilikaten wie beispielsweise Wassergläsern, insbesondere sind diese frei von Kalium- und/oder Natriumwassergläsern. Es wurde gefunden, dass wässrige Alkalisilikate mit den $Ca^{2+}$-Ionen der Calcium-Ionenquellen ausfallen.

Weiterhin kann es bevorzugt sein, dass die Füllstoffe der erfindungsgemäßen Beschichtungszusammenset-zung eine mittlere Partikelgröße $D_{50}$ von 1-50 $\mu$m, vorzugsweise 1-30 $\mu$m, weiter bevorzugt 1-20 $\mu$m, aufweist, wobei die mittlere Partikelgröße gemäß DIN ISO 9276-1:2004-09 und DIN ISO 9276-2:2014-05 bestimmbar ist. Die mittlere Partikelgröße $D_{50}$, auch D50-Wert oder Medianwert genannt, gibt die mittlere Partikelgröße eines Füllstoffs an, so dass der Anteil der Partikel, die größer als der D50-Wert sind, gleich dem Anteil der Partikel ist, die kleiner als der D50-Wert sind. Der D50-Wert kanns mittels eines Mastersizer 3000 der Firma Malvern Instruments Limited bestimmt werden.

Eine weitere relevante Kenngröße ist die Pigment-Volumen-Konzentration (PVK). Die erfindungsgemäße Beschichtungszusammensetzung ist eine überkritische Zusammensetzung, die dadurch gekennzeichnet ist, dass sie eine PVK zwischen 60 % und 95 %, vorzugsweise zwischen 65 und 92 %, insbesondere bevorzugt zwischen 70 % und 90 %, aufweist.

Die PVK bezeichnet das Verhältnis des Volumens der enthaltenen Pigmente ($V_{Pigmente}$), Füllstoffe ($V_{Füllstoffe}$) und anderen, nicht-filmbildenden festen Teilchen ($V_{nffT}$) zum Gesamtvolumen an nichtflüchtigen Bestandteilen. Hierzu zählen in der Regel Pigmente, Füllstoffe, nicht-filmbildenden festen Teilchen und Bindemittel ($V_{Bindemittel}$). Die Calcium-Ionenquellen als Bestandteile der erfindungsgemäßen Beschichtungszusammensetzung werden in der Berechnung der PVK als nichtfilmbildende feste Teilchen ($V_{nffT}$) gezählt.

Die PVK ist demnach eine wesentliche Größe zur Charakterisierung des Volumenverhältnisses von Pigmenten, Füllstoffen und anderen Feststoffen zum Bindemittel. Je niedriger die PVK ist, desto höher ist in der Regel der Bindemittelanteil. Für die Bestimmung der PVK kann Rückgriff auf die DIN EN ISO 4618:2015-01 genommen werden. Die Berechnung der PVK erfolgt gemäß der Formel:

$$PVK\ [\%] = ((\sum V_{\text{Pigmente}} + \sum V_{\text{Füllstoffe}} + \sum V_{\text{nffT}})\ /$$

$$(\sum V_{\text{Pigmente}} + \sum V_{\text{Füllstoffe}} + \sum V_{\text{Bindemittel}} + \sum V_{\text{nffT}}))\ \text{x}\ 100$$

Die beanspruchte Beschichtungszusammensetzung weist vorzugsweise eine PVK zwischen 60% und 95% auf. Eine derartige PKV ist für einen Sperrgrund sehr hoch. Das bedeutet, dass der Bindemittelanteil gemäß obiger Gleichung sehr gering ist. Trotz des sehr niedrigen Anteils an organischem Bindemittel hat die erfindungsgemäße Beschichtungszusammensetzung eine optimale Absperrwirkung. Die kritische Pigment-Volumen-Konzentration (KPVK) wird gemäß DIN EN ISO 4618:2015-01 als ein bestimmter Wert der PVK definiert, bei dem die Hohlräume zwischen den sich berührenden Feststoffpartikeln einer Beschichtung gerade noch mit Bindemittel gefüllt sind. Der Bereich oberhalb der KPVK wird als überkritischer Bereich definiert, bei dem die Hohlräume nicht vollständig mit Bindemittel gefüllt sind. Der Bereich Unterhalb der KPVK wird als unterkritischer Bereich definiert, bei dem alle Hohlräume vollständig mit Bindemittel gefüllt sind. Die erfindungsgemäße Beschichtungszusammensetzung ist eine überkritische Zusammensetzung.

In einer weiteren bevorzugten Ausgestaltung ist die die Beschichtungszusammensetzung im Wesentlichen frei von Konservierungsmitteln, insbesondere frei von Topfkonservierungsmittel und/oder Filmkonservierungsmittel. Besonders bevorzugt beträgt der Anteil an Konservierungsmitteln in der Beschichtungszusammensetzung ≤ 50 ppm, bevorzugt ≤ 20 ppm, noch mehr bevorzugt ≤ 10 ppm und am meisten bevorzugt ≤ 5 ppm.

Weiterhin betrifft die vorliegende Erfindung die Verwendung der erfindungsgemäßen Beschichtungszusammensetzung auf einer Lignin-haltigen Oberfläche als Sperrgrund, insbesondere gegen Lignin-Ausblutungen. Vorzugsweise umfasst die Oberfläche Pappe, Karton und/oder Holz, und mehr bevorzugt ist die Oberfläche eine Gipskartonplatte und/oder eine Gipsfaserplatte ist.

Ebenfalls umfasst die vorliegende Erfindung eine Lignin-haltige Oberfläche, die mit einer Sperrgrundschicht aus der erfindungsgemäßen Beschichtungszusammensetzung versehen ist. Vorzugsweise ist die Oberfläche mit 100 bis 300 g pro $m^2$ der Beschichtungszusammensetzung, mehr bevorzugt mit 120 bis 280 g pro $m^2$, noch weiter bevorzugt 150 bis 250 g pro $m^2$ versehen. Weiterhin ist es bevorzugt, dass die Lignin-haltige Oberfläche eine Gipskartonplatte oder eine Gipsfaserplatte ist.

Die Erfindung wird weiter anhand der folgenden Beispiele erläutert:

Beispiel 1 (erfindungsgemäß)

- 5,0 Gew.-% organisches Polymerbindemittel auf Basis von Reinacrylat (Feststoff)
- 25,0 Gew.-% Calciumhydroxid als Calcium-Ionenquelle
- 17,5 Gew.-% Calciumcarbonat als Füllstoff
- 3,0 Gew.-% Titandioxid als Weißpigment
- 1,5 Gew.-% übliche Additive, insbesondere Netz- und Dispergiermittel, Entschäumer, Verdicker
- 48,0 Gew.-% Wasser.

Vergleichsbeispiel

- 5,0 Gew.-% organisches Polymerbindemittel auf Basis von Reinacrylat (Feststoff)
- 5,0 Gew.-% Calciumhydroxid als Calcium-Ionenquelle
- 37,5 Gew.-% Calciumcarbonat als Füllstoff
- 3,0 Gew.-% Titandioxid als Weißpigment
- 1,5 Gew.-% übliche Additive, insbesondere Netz- und Dispergiermittel, Entschäumer, Verdicker
- 48,0 Gew.-% Wasser

Die Beschichtungszusammensetzungen wurden nebeneinander auf eine GKP, die teilflächig vorher der natürlichen Sonnenstrahlung für 20 Stunden ausgesetzt wurde, mit einem Verbrauch von 200 g/$m^2$ aufgebracht. Nach 24 Stunden Trocknung der GKP unter Normalbedingungen (23°C, 50% rel. LF) wurde auf die GKP ganzflächig ein Dispersionssilikat-Kratzputz K1 mit einem Verbrauch von 2,0 kg /$m^2$ aufgebracht. Auf eine Teilfläche der GKP wurde keine Beschichtungszusammensetzung aufgebracht. Auf diese Teilfläche wurde als Nullprobe nach dem Bestrahlen mit natürlicher Sonnenstrahlung für 20 Stunden direkt der Dispersionssilikat-Kratzputz K1 mit einem Verbrauch von 2,0 kg /$m^2$ aufgebracht.

In regelmäßigen Zeitabständen wurde der Farbabstand (ΔE - Werte im CIELAB-Farbenraum) der beschichteten GKP gemessen. Als Bezugspunkte wurden jeweils die unbelichteten Teilflächen der beschichteten GKP genommen. Nach einer Woche betrug der Farbabstand ΔE bei der erfindungsgemäßen Beschichtung 1,0 Einheiten, bei dem Vergleichsbeispiel dagegen 4,7 Einheiten. Bei der Nullprobe (ohne Beschichtungszusammensetzung) betrug der Farbabstand ΔE 5,3 Einheiten.

Die erfindungsgemäße Beschichtungszusammensetzung des Beispiels 1 weist insgesamt 20 Gew.% mehr der Calcium-Ionenquelle auf als das Vergleichsbeispiel. Es zeigte sich, dass bei einem Anteil von lediglich 5 Gew.% der Calcium-Ionenquelle gemäß des Vergleichsbeispiels das Migrieren von Holzinhaltsstoffen wie Lignin an die Oberfläche nicht zufriedenstellend unterbunden werden konnte. Es zeigte sich weiter, dass eine mit der Beschichtungszusammensetzung des Beispiels 1 beschichtete Oberfläche keinerlei Lignin-Ausblutungen zeigte. Dies war überraschend, da die aus dem Stand der Technik bekannten Sperrgrunde regelmäßig Bindemittelmengen von > 50 Gew.% benötigen, um gleiche Ergebnisse zu erzielen. Auf dem Teilstück der GKP, auf das vor Auftragen des Dispersionssilikat-Kratzputzes K1 keine Beschichtungszusammensetzung aufgetragen wurde, war erwartungsgemäß der Farbabstand am deutlichsten zu erkennen.

**Patentansprüche**

1. Beschichtungszusammensetzung zur Verwendung als Sperrgrund, umfassend:

   - 1-12 Gew. % ein oder mehrere organische(s) Polymerbindemittel,
   - 10-50 Gew. % eine oder mehrere Calcium-Ionenquelle(n),
   - 2-50 Gew. % einen oder mehrere Füllstoff(e),
   - 30-85 Gew % Wasser,

   wobei die Calcium-Ionenquelle(n) ein Löslichkeitsprodukt, berechnet als negativer dekadischer Logarithmus ($pK_L$) bei 25°C von 4,0 bis 7,0 aufweisen.

2. Beschichtungszusammensetzung nach Anspruch 1, umfassend:

   - 2-10 Gew.%, bevorzugt 3-8 Gew.% ein oder mehrere organische(s) Polymerbindemittel, und/oder
   - 10-45 Gew.%, bevorzugt 15-40 Gew.% eine oder mehrere Calcium-Ionenquelle(n), und/oder
   - 5-40 Gew.%, bevorzugt 8-35 Gew.% einen oder mehrere Füllstoff(e).

3. Beschichtungszusammensetzung nach Anspruch 1 oder 2, weiterhin umfassend

   - 0-10 Gew.%, vorzugsweise 0,1-6 Gew.%, stärker bevorzugt 1-4 Gew.% ein oder mehrere Pigment(e), insbesondere Weißpigmente und/oder Farbpigmente, und/oder
   - 0,1-5 Gew.%, vorzugsweise 0,2-3 Gew.%, stärker bevorzugt 0,3-2 Gew.% eines oder mehrerer Additive, ausgewählt aus einem oder mehreren Mitgliedern der Gruppe bestehend aus: rheologische Additive, Verdicker, Netzmittel, Dispergiermittel, Topfkonservierungsmittel, Filmkonservierungsmittel, Filmbindehilfsmittel, Entschäumer, pH-Einsteller, Wasserrückhaltemittel, Fasern, Biozide.

4. Beschichtungszusammensetzung nach einem der vorhergehenden Ansprüche, wobei das organische Polymerbindemittel ausgesucht ist aus einem oder mehreren Mitgliedern der Gruppe bestehend aus: Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, bevorzugt auf Basis von Reinacrylaten.

5. Beschichtungszusammensetzung nach einem der vorherigen Ansprüche, wobei die Calcium-Ionenquelle(n) Calciumhydroxid (Ca(OH)$_2$) und/oder Calciumsulfat (CaSO$_4$) umfassen, bevorzugt Calciumhydroxid (Ca(OH)$_2$).

6. Beschichtungszusammensetzung nach einem der vorherigen Ansprüche, wobei der oder die Füllstoff(e) einen karbonatischen und/oder silikatischen Füllstoff umfasst, wobei vorzugsweise der Füllstoff ausgewählt ist aus einem oder mehreren Mitgliedern der Gruppe bestehend aus: Quarz, Cristobalit, Schichtsilikate, Talkum, Kaolin, Glimmer, Calcit, Marmor, Dolomit, Calciumcarbonat (CaCO$_3$), besonders bevorzugt Calciumcarbonat (CaCO$_3$).

7. Beschichtungszusammensetzung nach einem der vorherigen Ansprüche, wobei der oder die Füllstoff(e) eine mittlere

Partikelgröße $D_{50}$ von 1-50 µm, vorzugsweise 1-30 µm, weiter bevorzugt 1-20 µm, aufweist, bestimmbar gemäß DIN ISO 9276-1:2004-09 und DIN ISO 9276-2:2014-05.

8. Beschichtungszusammensetzung nach einem der vorherigen Ansprüche, aufweisend eine Pigment-Volumen-Konzentration (PVK) zwischen 60 % und 95 %, vorzugsweise zwischen 65 und 92 %, insbesondere bevorzugt zwischen 70 % und 90 %.

9. Beschichtungszusammensetzung nach einem der vorherigen Ansprüche, aufweisend einen pH-Wert > 10, bevorzugt > 11, mehr bevorzugt > 12 ist.

10. Beschichtungszusammensetzung nach einem der vorherigen Ansprüche, wobei die Beschichtungszusammensetzung im Wesentlichen frei von Konservierungsmitteln, insbesondere Topfkonservierungsmittel und/oder Filmkonservierungsmittel ist, wobei vorzugsweise der Anteil an Konservierungsmitteln ≤ 50 ppm, mehr bevorzugt ≤ 20 ppm, noch mehr bevorzugt ≤ 10 ppm und am meisten bevorzugt ≤ 5 ppm beträgt.

11. Verwendung einer Beschichtungszusammensetzung nach einem der Ansprüche 1 bis 10 auf einer Lignin-haltigen Oberfläche, wobei vorzugsweise die Oberfläche Pappe, Karton und/oder Holz umfasst, wobei weiter bevorzugt die Oberfläche eine Gipskartonplatte und/oder eine Gipsfaserplatte ist.

12. Lignin-haltige Oberfläche, vorzugsweise umfassend Pappe und/oder Karton und/oder Holz, **gekennzeichnet durch** eine Sperrgrundschicht der Beschichtungszusammensetzung nach einem der Ansprüche 1 bis 10.

13. Lignin-haltige Oberfläche nach Anspruch 12, wobei die Oberfläche mit 100 bis 300 g pro m$^2$ der Beschichtungszusammensetzung, vorzugsweise mit 120 bis 280 g pro m$^2$, mehr bevorzugt mit 150 bis 250 g pro m$^2$ beschichtet ist.

14. Lignin-haltige Oberfläche nach Anspruch 12 oder 13, wobei die Oberfläche eine Gipskartonplatte und/oder eine Gipsfaserplatte ist.

Europäisches
Patentamt

European
Patent Office

Office européen
des brevets

## EUROPÄISCHER RECHERCHENBERICHT

Nummer der Anmeldung

EP 24 21 0573

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/317807 A1 (LU WEIJIA WILLIAM [HK] ET AL) 25. Dezember 2008 (2008-12-25) <br> * Absatz [0031] - Absatz [0046] * <br> * Absatz [0061] - Absatz [0074] * <br> * Absatz [0102] - Absatz [0105] * <br> * Zusammenfassung; Ansprüche 1-22; Abbildungen 1-7; Beispiele 1-6 * <br> ----- | 1-14 | INV. <br> C09D5/00 |
| X | TW 201 302 614 A (OMYA DEVELOPMENT AG [CH]) 16. Januar 2013 (2013-01-16) <br> * Zusammenfassung; Ansprüche 1-15; Abbildungen 1-6; Beispiele 1, 2 * <br> ----- | 1-14 | |
| X | US 2017/072727 A1 (WEIHS JAN PHILIPP [CH] ET AL) 16. März 2017 (2017-03-16) <br> * Absatz [0011] - Absatz [0034] * <br> * Absatz [0053] - Absatz [0080] * <br> * Absatz [0141] - Absatz [0161] * <br> * Zusammenfassung; Ansprüche 1-16; Abbildungen 1-4; Tabellen 1-4 * <br> ----- | 1-14 | |
| X | US 2018/258586 A1 (GANE PATRICK A C [CH] ET AL) 13. September 2018 (2018-09-13) <br> * Absatz [0017] - Absatz [0037] * <br> * Absatz [0059] - Absatz [0070] * <br> * Absatz [0125] - Absatz [0135] * <br> * Zusammenfassung; Ansprüche 1-17; Beispiele 1-11; Tabellen 1-30 * <br> ----- | 1-14 | **RECHERCHIERTE SACHGEBIETE (IPC)** <br><br> C09D |

Der vorliegende Recherchenbericht wurde für alle Patentansprüche erstellt

| Recherchenort | Abschlußdatum der Recherche | Prüfer |
|---|---|---|
| München | 29. April 2025 | Glomm, Bernhard |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 0573

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2025

| Im Recherchenbericht angeführtes Patentdokument | Datum der Veröffentlichung | Mitglied(er) der Patentfamilie | Datum der Veröffentlichung |
|---|---|---|---|
| US 2008317807 A1 | 25-12-2008 | CN 101715350 A | 26-05-2010 |
| | | EP 2164533 A1 | 24-03-2010 |
| | | US 2008317807 A1 | 25-12-2008 |
| | | WO 2009000158 A1 | 31-12-2008 |
| TW 201302614 A | 16-01-2013 | TW 201302344 A | 16-01-2013 |
| | | TW 201302614 A | 16-01-2013 |
| US 2017072727 A1 | 16-03-2017 | AU 2015266246 A1 | 24-11-2016 |
| | | CA 2948426 A1 | 03-12-2015 |
| | | CL 2016003027 A1 | 12-05-2017 |
| | | CN 106460341 A | 22-02-2017 |
| | | DK 2949477 T3 | 06-03-2017 |
| | | EP 2949477 A1 | 02-12-2015 |
| | | EP 3148817 A1 | 05-04-2017 |
| | | ES 2617559 T3 | 19-06-2017 |
| | | HU E033208 T2 | 28-11-2017 |
| | | JP 2017524557 A | 31-08-2017 |
| | | KR 20170007802 A | 20-01-2017 |
| | | PL 2949477 T3 | 30-06-2017 |
| | | PT 2949477 T | 02-03-2017 |
| | | TW 201604035 A | 01-02-2016 |
| | | US 2017072727 A1 | 16-03-2017 |
| | | WO 2015180933 A1 | 03-12-2015 |
| US 2018258586 A1 | 13-09-2018 | BR 112018007195 A2 | 16-10-2018 |
| | | CA 3000590 A1 | 20-04-2017 |
| | | CN 108138438 A | 08-06-2018 |
| | | EP 3156540 A1 | 19-04-2017 |
| | | EP 3362600 A1 | 22-08-2018 |
| | | ES 2851498 T3 | 07-09-2021 |
| | | HR P20210221 T1 | 11-06-2021 |
| | | JP 6752892 B2 | 09-09-2020 |
| | | JP 2018529857 A | 11-10-2018 |
| | | KR 20180066190 A | 18-06-2018 |
| | | SI 3362600 T1 | 31-03-2021 |
| | | TW 201718840 A | 01-06-2017 |
| | | US 2018258586 A1 | 13-09-2018 |
| | | WO 2017063971 A1 | 20-04-2017 |

EPO FORM P0461

Für nähere Einzelheiten zu diesem Anhang : siehe Amtsblatt des Europäischen Patentamts, Nr.12/82